# EUROPEAN PATENT SPECIFICATION

(11) **EP 3 129 438 B1**
(45) Date of publication and mention of the grant of the patent: **13.06.2018**
(21) Application number: 15741922.7
(22) Date of filing: 07.04.2015
(51) Int. Cl.: C09D 11/106, C09D 11/322, C09D 11/033, C09D 11/38

(54) **INK COMPOSITION**
TINTENZUSAMMENSETZUNG
COMPOSITION D'ENCRE

(30) Priority: 09.04.2014 EP 14164074
(43) Date of publication of application: 15.02.2017
(73) Proprietor: OCE-Technologies B.V., 5914 CA Venlo (NL)
(72) Inventor: VERHEGGEN, Michael T.J., NL-6006 HG Weert (NL); EVERHARDUS, Roelof H., NL-5943 BA Lomm (NL); VAN ROY, Antonius P.M.M., NL-5985 PL Grashoek (NL)
(74) Representative: OCE IP Department
(86) International application number: PCT/EP2015/057434
(87) International publication number: WO 2015/155146

(56) References cited:
- EP-A2- 2 055 752
- WO-A1-2013/189746
- US-A1- 2007 100 024
- US-A1- 2010 168 322
- US-A1- 2012 227 619

## Description

### FIELD OF THE INVENTION

The present invention relates to an ink composition, suitable for use in an inkjet printing process.

### BACKGROUND ART

Trimethylol-propane (TMP) is a well known co-solvent for use in aqueous inkjet inks. This kind of polar non-volatile polyhydric alcohols is commonly used as a stabilizing ink fraction to obtain print head jet-reliability. Moreover this particular compound effectively assists in preventing print media deformation of inkjet prints.

It was observed that also in latex- containing pigmented aqueous inks, i.e. aqueous inks comprising a dispersion of polymer particles (latex) and pigment particles, TMP acts as a stabilizing and a deformation-preventing co-solvent, even in the case of high speed/productive inkjet printing.

However this co-solvent fraction also has to fulfill other requirements, like rheological and penetration properties of the ink on more or less absorbing media, i.e. a broad media range comprising plain papers, inkjet-coated and offset-coated media. Typically TMP-containing aqueous inks show a too low viscosity (i.e. to enable a stable ink-jet process) when using an effective amount of TMP from 10 weight% up to approximately 25 weight% and a functionally desired latex resin concentration of about 6 weight% together with approximately 4 weight% of one of the CMYK-pigments. All concentrations are indicated relative to the total weight of the ink composition.

It is a disadvantage of the prior art ink compositions that by increasing the latex-resin concentrations and/or the addition of thickening co-solvents like especially glycerol, to reach the optimal jet-viscosity of the ink required by the print head, provides ink recipes with lack of tolerance towards the mentioned media range to be printed on with good print quality and robustness.

It is therefore an object of the present invention to provide an ink composition that overcomes or at least mitigates the above stated disadvantage, i.e. to provide an ink composition that shows improved print robustness while maintaining print head reliability and print quality on a wide media range.

### SUMMARY OF THE INVENTION

The object is at least partly achieved by providing an ink composition comprising a dispersion of resin particles in water (i.e. a latex), a colorant and a co-solvent fraction for stabilizing the dispersion, wherein the co-solvent fraction comprises a branched polyhydric alcohol and wherein the ink composition further comprises between 0.1 and 5 weight% poly vinyl pyrrolidone having a weight average molecular weight of at least 5000 g/mol.

Inventors have found that if poly vinyl pyrrolidone (PVP) is added to the basic recipe of latex-resin, colorant (e.g. a pigment), a branched polyhydric alcohol and/or a (poly)ether modified derivative thereof and water, the lack of tolerance regarding latex-resin concentration and thickening additives in view of the mentioned media range to be printed on improves, while retaining good print quality, adhesion and robustness on said media range. In this way robust look and feel films can be realized also on less absorbing media, like the offset coated gloss, silk and matt ones with a better freedom towards recipe variation of latex- and the concentrations of the ingredients.

Without wanting to be bound to any theory it is believed that the good solubility of the branched polyhydric alcohol (e.g. TMP) or its (poly)ether modified derivative in the aqueous ink and its compatibility with the latex and pigment dispersion hinder a clean film separation and may cause inclusions of co-solvents into the film. The high molecular PVP apparently enhances the separative effect on the media gradually leading to clean film formation without such inclusions.

Furthermore, the addition of PVP increases the viscosity of the ink composition compared to the basic ink recipe, which provides design freedom of ink compositions in terms of concentration of latex particles, pigment particles and other additives that influence the viscosity (e.g. less latex, pigment and thickening additives are needed for obtaining an ink showing good jet reliability). Said components can therefore be used in functional amounts instead of in amounts needed for satisfying other ink criteria (e.g. the concentration of latex particles does not need to be increased to satisfy viscosity criteria of the ink composition).

In an embodiment, the co-solvent fraction further comprises a linear polyhydric alcohol.

In an embodiment, at least one linear polyhydric alcohol is selected from the group consisting of glycerol, 1,2,6-hexanetriol, diethylene glycol, triethylene glycol, tetra-ethylene glycol and dipropylene glycol.

Such linear polyhydric alcohols provide a longer nozzle open time (humectant function) and may also influence the viscosity of the ink composition, which may again be tuned with the PVP concentration in the ink composition.

In an embodiment, the branched polyhydric alcohol comprises between 3 and 9 carbon atoms and 3 OH-groups.

In an embodiment, the branched polyhydric alcohol or its (poly)ether modified derivative satisfies the following formula: 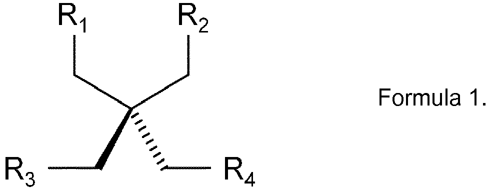 wherein:
R₁, R₂, R₃ and R₄ may be independently selected from -H; -OH; -CH₃ and -O-[CH₂-CH₂-O]ₚ-[CH₂-CH(CH₃)-O]_{q}-[CH(CH₃)-CH₂-O]ᵣ-H, wherein p, q and rare integers selected independently of one another in a range of between 0 and 25; with the proviso that at least two of the R₁-R₄ groups are independently of one another selected from the group consisting of-OH, and -O-[CH₂-CH₂-O]ₚ-[CH₂-CH(CH₃)-O]_{q}-[CH(CH₃)-CH₂-O]ᵣ-H, wherein p, q and r have the above described meaning.

In the present embodiment, -O-[CH₂-CH₂-O]ₚ-[CH₂-CH(CH₃)-O]_{q}-[CH(CH₃)-CH₂-O]ᵣ-H, represents a (poly)ether moiety comprising polyethyleneoxide groups (PEO, also termed ethoxylate groups) if p>0 and polypropylene oxide groups (PPO, also termed propoxylated groups) if q>0 and/or r>0.
In case q=0 and r=0, the (poly)ether moiety is a homopolymeric polyethyleneoxide group.
In case p=0, the (poly)ether moiety is a homopolymeric polypropylene oxide group.

In accordance with the present embodiment, the (poly)ether modification may comprise substitution by a copolymeric group comprising ethylene oxide (EO) and propylene oxide (PO) moieties, these moieties may be arranged in a block copolymeric arrangement, in an alternating copolymeric arrangement, in a periodic copolymeric arrangement or in a random copolymeric arrangement.

In an embodiment, the branched polyhydric alcohol and/or the derivative thereof has a number average molecular weight (Mₙ) of less than 1000 g/mol, preferably between 200 and 800 g/mol, more preferably between 200-600 g/mol.
If the polyhydric alcohols or derivatives thereof having a number average molecular weight of more than 1000 g/mol are used, the ink absorption in the media may be disturbed.

In an embodiment, at least one branched polyhydric alcohol is selected from the group consisting of trimethylol propane, trimethylol ethane, pentaerithritol and neopentylglycol.

In an embodiment, at least one (poly)ether modified branched polyhydric alcohol is selected from the group consisting of: trimethylol propane ethoxylate, trimethylol ethane ethoxylate, pentaerithritol ethoxylate, neopentylglycol ethoxylate, trimethylol propane propoxylate, trimethylol ethane propoxylate, pentaerithritol propoxylate and neopentylglycol propoxylate.

In an embodiment, the poly vinyl pyrrolidone has a weight average molecular (M_{W}) weight of at least 7500 g/mol, preferably at least 10000 g/mol, more preferably between 10000 g/mol and 30000 g/mol.

In an embodiment, the poly vinyl pyrrolidone is present in an amount of between 0.2 and 3 weight%, preferably between 0.3 and 1.5 weight% relative to the total ink composition.

In an embodiment, the ink composition comprises :
- 0.5 - 20 wt% of water dispersed resin particles;
- 0.5 - 15 wt% of a colorant;
- 5 - 20 wt% linear polyhydric alcohol;
- 5 - 30 wt% branched polyhydric alcohol or a (poly)ether modified derivative of a branched polyhydric alcohol;
- 0.1 - 5 wt% poly vinyl pyrrolidone having a weight average molecular weight of between 5000 g/mol and 30000 g/mol, wherein all amount are relative to the total ink composition.

In an embodiment, the ink composition comprises:
- 20 - 80 wt% water;
- 0.5 - 20 wt% of water dispersed resin particles;
- 0.5 - 15 wt% of a colorant;
- 5 - 20 wt% of a linear polyhydric alcohol selected from the group consisting of glycerol, 1,2,6-hexanetriol, diethylene glycol, triethylene glycol, tetra-ethylene glycol and dipropylene glycol;
- 5 - 30 wt% of a branched polyhydric alcohol selected from the group consisting of trimethylol propane, trimethylol ethane pentaerithritol, neopentylglycol and/or a (poly)ether modified derivative of a branched polyhydric alcohol selected from the group consisting of trimethylol propane ethoxylate, trimethylol ethane ethoxylate, pentaerithritol ethoxylate, neopentylglycol ethoxylate, trimethylol propane propoxylate, trimethylol ethane propoxylate, pentaerithritol propoxylate, neopentylglycol propoxylate; and
- 0.1 - 3 wt% poly vinyl pyrrolidone having a weight averaged molecular weight (M_{W}) of at least 7500 g/mol, wherein all amount are relative to the total ink composition.

### BRIEF DESCRIPTION OF THE DRAWINGS

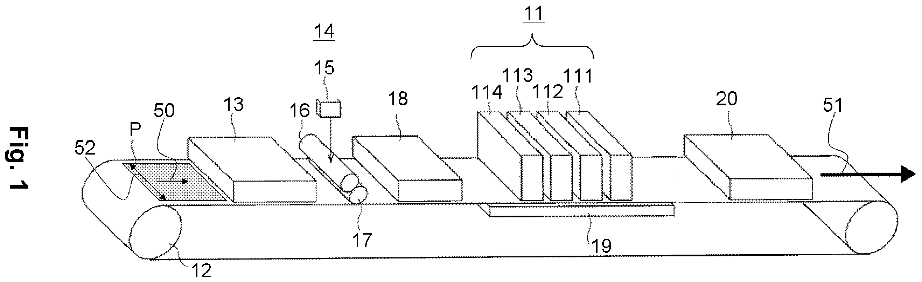

The present invention will become more fully understood from the detailed description given herein below and accompanying schematical drawings which are given by way of illustration only and are not limitative of the invention, and wherein: Fig. 1 shows a schematic representation of an inkjet printing system.

### DETAILED DESCRIPTION

### Ink composition

An (aqueous) ink composition according to the present invention comprises a dispersion of resin particles in water (i.e. a latex), a colorant and a co-solvent fraction for stabilizing the dispersion, wherein the co-solvent fraction is a mixture of a linear polyhydric alcohol and a branched polyhydric alcohol, wherein the ink composition further comprises between 0.1 and 5 weight% poly vinyl pyrrolidone having a weight average molecular weight of at least 10000 g/mol. The components of the inks will be described in detail in the next sections.

### Dispersion of resin particles

The inkjet ink according to the present invention contains a water-dispersible resin in view of the pigment fixability to recording media. As the water-dispersible resin, a water-dispersible resin excellent in film formability (image formability) and having high water repellency, high waterfastness, and high weatherability is useful in recording images having high waterfastness and high image density (high color developing ability). Examples of the water-dispersible resin include synthetic resins and natural polymer compounds.
Examples of the synthetic resins include polyester resins, polyurethane resins, polyepoxy resins, polyamide resins, polyether resins, poly(meth)acrylic resins, acryl-silicone resins, fluorine-based resins, polyolefin resins, polystyrene-based resins, polybutadiene-based resins, polyvinyl acetate-based resins, polyvinyl alcohol-based resins, polyvinyl ester-based resins, polyvinyl chloride-based resins, polyacrylic acid-based resins, unsaturated carboxylic acid-based resins and copolymers such as styrene - acrylate copolymer resins, styrene-butadiene copolymer resins.
Examples of the natural polymer compounds include celluloses, rosins, and natural rubbers.
Examples of commercially available water-dispersible resin emulsions include: Joncryl 537 and 7640 (styrene-acrylic resin emulsion, made by Johnson Polymer Co., Ltd.), Microgel E-1002 and E-5002 (styrene-acrylic resin emulsion, made by Nippon Paint Co., Ltd.), Voncoat 4001 (acrylic resin emulsion, made by Dainippon Ink and Chemicals Co., Ltd.), Voncoat 5454 (styrene-acrylic resin emulsion, made by Dainippon Ink and Chemicals Co., Ltd.), SAE-1014 (styrene-acrylic resin emulsion, made by Zeon Japan Co., Ltd.), Jurymer ET-410 (acrylic resin emulsion, made by Nihon Junyaku Co., Ltd.), Aron HD-5 and A-104 (acrylic resin emulsion, made by Toa Gosei Co., Ltd.), Saibinol SK-200 (acrylic resin emulsion, made by Saiden Chemical Industry Co., Ltd.), and Zaikthene L (acrylic resin emulsion, made by Sumitomo Seika Chemicals Co., Ltd.), acrylic copolymer emulsions of DSM Neoresins, e.g. the NeoCryl product line, in particular acrylic styrene copolymer emulsions NeoCryl A-662, NeoCryl A-1131, NeoCryl A-2091, NeoCryl A-550, NeoCryl BT-101, NeoCryl SR-270, NeoCryl XK-52, NeoCryl XK-39, NeoCryl A-1044, NeoCryl A-1049, NeoCryl A-1110, NeoCryl A-1120, NeoCryl A-1127, NeoCryl A-2092, NeoCryl A-2099, NeoCryl A-308, NeoCryl A-45, NeoCryl A-615, NeoCryl BT-24, NeoCryl BT-26, NeoCryl XK-15, NeoCryl X-151, NeoCryl XK-232, NeoCryl XK-234, NeoCryl XK-237, NeoCryl XK-238-NeoCryl XK-86, NeoCryl XK-90 and NeoCryl XK-95 However, the water-dispersible resin emulsion is not limited to these examples.

The content of the water-dispersible resin added in the ink of the present invention is preferably from 1 - 40 weight% based on the total weight of the ink, and it is more preferably from 1.5 - 30 weight%, and it is still more preferably from 2 - 25 weight%. Even more preferably, the amount of the water-dispersible resin contained in the inkjet ink, as a solid content, is 2.5 weight% to 15 weight%, and more preferably 3 weight% to 7 weight%, relative to the total ink composition.

In an embodiment, the ink composition according to the present invention comprises two or more water-dispersible resins selected from the above cited synthetic resins, synthetic copolymer resins and natural polymer compounds in admixture with each other.

### Colorant

The colorant may be a pigment or a mixture of pigments, a dye or a mixture of dyes or a mixture comprising pigments and dyes.

In the inkjet ink according to the present invention, a pigment is primarily used as a water-dispersible colorant in view of the weatherability, and, for the purpose of controlling color tone, a dye may be contained within the range not impairing the weatherability. The pigment is not particularly limited and may be suitably selected in accordance with the intended use.

Specific pigments which are preferably usable are listed below.

Examples of pigments for magenta or red include: C.I. Pigment Red 1, C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 17, C.I. Pigment Red 22, C.I. Pigment Red 23, C.I. Pigment Red 31, C.I. Pigment Red 38, C.I. Pigment Red 48:1, C.I. Pigment Red 48:2 (Permanent Red 2B(Ca)), C.I. Pigment Red 48:3, C.I. Pigment Red 48:4, C.I. Pigment Red 49:1, C.I. Pigment Red 52:2; C.I. Pigment Red 53:1, C.I. Pigment Red 57:1 (Brilliant Carmine 6B), C.I. Pigment Red 60:1, C.I. Pigment Red 63:1, C.I. Pigment Red 64:1, C.I. Pigment Red 81. C.I. Pigment Red 83, C.I. Pigment Red 88, C.I. Pigment Red 101(colcothar), C.I. Pigment Red 104, C.I. Pigment Red 106, C.I. Pigment Red 108 (Cadmium Red), C.I. Pigment Red 112, C.I. Pigment Red 114, C.I. Pigment Red 122 (Quinacridone Magenta), C.I. Pigment Red 123, C.I. Pigment Red 139, C.I. Pigment Red 44, C.I. Pigment Red 146, C.I. Pigment Red 149, C.I. Pigment Red 166, C.I. Pigment Red 168, C.I. Pigment Red 170, C.I. Pigment Red 172, C.I. Pigment Red 177, C.I. Pigment Red 178, C.I. Pigment Red 179, C.I. Pigment Red 185, C.I. Pigment Red 190, C.I. Pigment Red 193, C.I. Pigment Red 209, C.I. Pigment Red 219 and C.I. Pigment Red 222, C.I. Pigment Violet 1 (Rhodamine Lake), C.I. Pigment Violet 3, C.I. Pigment Violet 5:1, C.I. Pigment Violet 16, C.I. Pigment Violet 19, C.I. Pigment Violet 23 and C.I. Pigment Violet 38.

Examples of pigments for orange or yellow include: C.I. Pigment Yellow 1, C.I. Pigment Yellow 3, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 24, C.I. Pigment Yellow 34, C.I. Pigment Yellow 35, C.I. Pigment Yellow 37, C.I. Pigment Yellow 42 (yellow iron oxides), C.I. Pigment Yellow 53, C.I. Pigment Yellow 55, C.I. Pigment Yellow 74, C.I. Pigment Yellow 81, C.I. Pigment Yellow 83, C.I. Pigment Yellow 93, C.I. Pigment Yellow 94, C.I. Pigment Yellow 95, C.I. Pigment Yellow 97, C.I. Pigment Yellow 98, C.I. Pigment Yellow 100, C.I. Pigment Yellow 101, C.I. Pigment Yellow 104, C.I. Pigment Yellow 408, C.I. Pigment Yellow 109, C.I. Pigment Yellow 110, C.I. Pigment Yellow 117, C.I. Pigment Yellow 120, C.I. Pigment Yellow 128, C.I. Pigment Yellow 138, C.I. Pigment Yellow 150, C.I. Pigment Yellow 151, C.I. Pigment Yellow 153 and C.I. Pigment Yellow 183; C.I. Pigment Orange 5, C.I. Pigment Orange 13, C.I. Pigment Orange 16, C.I. Pigment Orange 17, C.I. Pigment Orange 31, C.I. Pigment Orange 34, C.I. Pigment Orange 36, C.I. Pigment Orange 43, and C.I. Pigment Orange 51.

Examples of pigments for green or cyan include: C.I. Pigment Blue 1, C.I. Pigment Blue 2, C.I. Pigment Blue 15, C.I. Pigment Blue 15:1, C.I. Pigment Blue 15:2, C.I. Pigment Blue 15:3 (Phthalocyanine Blue), C.I. Pigment Blue 16, C.I. Pigment Blue 17:1, C.I. Pigment Blue 56, C.I. Pigment Blue 60, C.I. Pigment Blue 63, C.I. Pigment Green 1, C.I. Pigment Green 4, C.I. Pigment Green 7, C.I. Pigment Green 8, C.I. Pigment Green 10, C.I. Pigment Green 17, C.I. Pigment Green 18 and C.I. Pigment Green 36.

In addition to the above pigments, when red, green, blue or intermediate colors are required, it is preferable that the following pigments are employed individually or in combination thereof. Examples of employable pigments include: C.I. Pigment Red 209, 224, 177, and 194, C.I. Pigment Orange 43, C.I. Vat Violet 3, C.I. Pigment Violet 19, 23, and 37, C.I. Pigment Green 36, and 7, C.I. Pigment Blue 15:6.

Further, examples of pigments for black include: C.I. Pigment Black 1, C.I. Pigment Black 6, C.I. Pigment Black 7 and C.I. Pigment Black 11. Specific examples of pigments for black color ink usable in the present invention include carbon blacks (e.g., furnace black, lamp black, acetylene black, and channel black); (C.I. Pigment Black 7) or metal-based pigments (e.g., copper, iron (C.I. Pigment Black 11), and titanium oxide; and organic pigments (e.g., aniline black (C.I. Pigment Black 1).

The amount of the colorant contained in the inkjet ink, as a solid content, is preferably 0.5 weight% to 15 weight%, more preferably 0.8 weight% to 10 weight%, and even more preferably between 1 weight% and 6 weight%. When the amount of the water-insoluble pigment is less than 0.5 weight%, the color developing ability and image density of the ink may degrade. When it is more than 15 weight%, unfavorably, the viscosity of the ink is increased, which may cause degradation of ink ejection stability.

### Cosolvent fraction

The cosolvent fraction in accordance with the present invention is intended to stabilize the dispersed particles present, thus improving print head jet-reliability and for effectively preventing paper deformation. A cosolvent fraction capable of achieving the above comprises a branched polyhydric alcohol and/or a (poly)ether modified derivative of a branched polyhydric alcohol.

Examples of suitable branched polyhydric alcohols are (but not limited to): trimethylol propane (TMP), trimethylol ethane (TME), pentaerithritol and neopentylglycol.

Examples of suitable (poly)ether modified branched polyhydric alcohols are (but are not limited to): trimethylol propane ethoxylate, trimethylol ethane ethoxylate, pentaerithritol ethoxylate, neopentylglycol ethoxylate, trimethylol propane propoxylate, trimethylol ethane propoxylate, pentaerithritol propoxylate, neopentylglycol propoxylate.

For improving the print robustness while maintaining other properties, such as ink absorption, the number average molecular weight (Mₙ) of the (poly)ether modified polyhydric alcohol preferably does not exceed 1000 g/mol.

The molar mass of the (poly)ether modified polyhydric alcohol depends on the degree of substitution of the corresponding polyhydric alcohol and the (poly)ether chain length (see Formula 1) :
Neopentyl glycol (Molar weight = 104 g/mol) : R₁=R₂= -H; R₃=R₄= -OH; maximum degree of substitution is 2 ;
Trimethylol ethane (Molar weight = 120 g/mol) : R₁= -H ; R₂=R₃=R₄= -OH; maximum degree of substitution is 3 ;
Trimethylol propane (Molar weight = 144 g/mol) : R₁=-CH₃; R₂=R₃=R₄= -OH; maximum degree of substitution is 3
Pentaerithritol (Molar weight = 136 g/mol) : R₁=R₂=R₃=R₄= -OH ; maximum degree of substitution is 4.

Commercially available (Sigma Aldrich) (poly)ether modified branched polyhydric alcohols are (but are not limited to) : pentaerithritol ethoxylate having a molar mass of 270 g/mol and 797 g/mol respectively; trimethylol ethoxylate having a molar mass of 170 g/mol, 450 g/mol, 730 g/mol and 1014 g/mol, respectively ; trimethylol propoxylate having a molar mass of 308 g/mol; pentaerithritol propoxylate having a molar mass of 426 g/mol and 624 g/mol respectively; and neopentyl glycol ethoxylate having a molar mass of 192 g/mol.

The average number of ethoxylate (p) or propoxylate groups (q+r) (see Formula 1) of the above disclosed (poly)ether modified polyhydric alcohols are given in Table 1.
Note that the length of individual (poly)ether chains (R₁-R₄ in Formula 1) depends on the degree of substitution as described above. For example if the degree of substitution of pentaerithritol ethoxylate having a molar mass of 270 g/mol is 3, the length of each (poly)ether chain is 1.

**Table 1 : average number of ethoxylate (p) or propoxylate groups (q+r) of (poly)ether modified branched polyhydric alcohols.**

| | Molar mass | p, q, r (Form. 1)¹ |
|---|---|---|
| Pentaerithritol ethoxylate | 270 | p=3, q=r=0 |
| | 797 | p=15, q=r=0 |
| Trimethylol ethoxylate | 170 | p=0.6, q=r=0 |
| | 450 | p=7, q=r=0 |
| | 730 | p=13.3, q=r=0 |
| | 1014 | p=19.7, q=r=0 |
| Trimethylol propolylate | 308 | p=0, q+r=2.8 |
| Pentaerithritol propoxylate | 426 | p=0, q+r=4.9 |
| | 624 | p=0, q+r=8.3 |
| Neopentyl glycol ethoxylate | 192 | p=2, q=r=0 |

The cosolvent fraction may comprise one or more branched polyhydric alcohols and/or one or more (poly)ether modified derivatives of a branched polyhydric alcohol.

The cosolvent fraction may further comprise a linear polyhydric alcohol.

Examples of suitable linear polyhydric alcohols are (but not limited to): glycerin, 1,2,6-hexanetriol, diethylene glycol, triethylene glycol, tetra-ethylene glycol and dipropylene glycol.

The cosolvent fraction may comprise one or more linear polyhydric alcohols.

The total amount of the cosolvent fraction ranges from 10 weight% to 50 weight% relative to the total ink composition, preferably from 20 weight% to 45 weight%, more preferably from 30 weight% to 40 weight%.

### Poly vinyl pyrrolidone

The ink composition according to the present invention comprises a small amount (between 0.1 and 5 weight%) of high molecular (weight average molecular weight of at least 5000 g/mol) poly vinyl pyrrolidone (PVP).
As a rule of thumb, it can be said that the higher the weight average molecular weight is, the lower the concentration in the ink composition needs to be to obtain the desired effect.

Commercially available PVP is PVP K25, a PVP having a weight average molecular weight (M_{w}) of 24000 g/mol, and PVP K15, a PVP having a weight average molecular weight (M_{w}) of 10000 g/mol, both of which can be obtained at Sigma Aldrich.

### Other additives

It is preferable that the ink of the present invention contains a surfactant in order to improve an ink ejection property and/or the wettability of the surface of a recording medium, and the image density and color saturation of the image formed and reducing white spots therein. To improve the spreading of the ink on the surface of recording medium and to reduce puddling, it is preferable to adjust the dynamic surface tension (measured at 10 Hz) of the ink composition to 35 mN/m or lower, preferably to 34 mN/m or lower, more preferably to 33 mN/m or lower, even more preferably to 32 mN/m or lower by the surfactant. The static surface tension of the ink composition is preferably below 30 mN/m (measured at 0.1 Hz). Examples of surfactants are not specifically limited and are well known in the art.

### Receiving media

Suitable receiving media for use in a printing process using an ink or set of inks (Cyan, Magenta, Yellow and blacK, CMYK) according to the present invention are not particularly limited to any type. The receiving medium may be suitably selected depending on the intended application.

Suitable receiving media may range from strongly water absorbing media such as plain paper (for example Océ Red Label) to non-water-absorbing media such as plastic sheets (for example PE, PP, PVC and PET films). To optimize print quality, inkjet coated media are known, which media comprise a highly water absorbing coating.

Of particular interest in the context of the present invention are Machine Coated (MC) media (also known as offset coated media) and glossy (coated) media. MC media are designed for use in conventional printing processes, for example offset printing and show good absorption characteristics with respect to solvents used in inks used in such printing processes, which are usually organic solvents. MC and glossy media show inferior absorption behavior with respect to water (worse than plain paper, better than plastic sheets), and hence aqueous inks.

### Printing process

A printing process in which the inks according to the present invention may be suitably used is described with reference to the appended drawings shown in Fig. 1.

Fig. 1 shows that a sheet of a receiving medium, P, is transported in a direction for conveyance as indicated by arrows 50 and 51 and with the aid of transportation mechanism 12. Transportation mechanism 12 may be a driven belt system comprising one (as shown in Fig. 1) or more belts. Alternatively, one or more of these belts may be exchanged for one or more drums. A transportation mechanism may be suitably configured depending on the requirements (e.g. sheet registration accuracy) of the sheet transportation in each step of the printing process and may hence comprise one or more driven belts and/or one or more drums. For a proper conveyance of the sheets of receiving medium, the sheets need to be fixed to the transportation mechanism. The way of fixation is not particularly limited and may be selected from electrostatic fixation, mechanical fixation (e.g. clamping) and vacuum fixation. Of these vacuum fixation is preferred.

The printing process as described below comprises of the following steps: media pre-treatment, image formation and drying and fixing. Optionally the printing process comprises a post treatment step, which is not described here.

### Media pre-treatment

To improve the spreading and pinning (i.e. fixation of pigments and water-dispersed polymer particles) of the ink on the receiving medium, in particular on slow absorbing media, such as machine coated media, the receiving medium may be pretreated, i.e. treated prior to printing an image on the medium. The pre-treatment step may comprise one or more of the following:
- preheating of the receiving medium to enhance spreading of the used ink on the receiving medium and/or to enhance absorption of the used ink into the receiving medium;
- primer pre-treatment for increasing the surface tension of receiving medium in order to improve the wettability of the receiving medium by the used ink and to control the stability of the dispersed solid fraction of the ink composition (i.e. pigments and dispersed polymer particles). Primer pre-treatment may be performed by coating the receiving medium with a pre-treatment liquid. The pre-treatment liquid may comprise water as a solvent, one or more cosolvents, additives such as surfactants and at least one compound selected from a polyvalent metal salt, an acid and a cationic resin. As an application way of the pre-treatment liquid, any conventionally known methods can be used. Specific examples of an application way include: a roller coating, an ink-jet application, a curtain coating and a spray coating;
- corona or plasma treatment.

Fig. 1 shows that the sheet of receiving medium P may be conveyed to and passed through a first pre-treatment module 13, which module may comprise a preheater, for example a radiation heater, a corona/plasma treatment unit, a gaseous acid treatment unit or a combination of any of the above. Optionally and subsequently, a predetermined quantity of the pre-treatment liquid is applied on the surface of the receiving medium P at pre-treatment liquid applying member 14. Specifically, the pre-treatment liquid is provided from storage tank 15 of the pre-treatment liquid to the pre-treatment liquid applying member 14 composed of double rolls 16 and 17. Each surface of the double rolls may be covered with a porous resin material such as sponge. After providing the pre-treatment liquid to auxiliary roll 16 first, the pre-treatment liquid is transferred to main roll 17, and a predetermined quantity is applied on the surface of the receiving medium P. Subsequently, the coated printing paper P on which the pre-treatment liquid was supplied may optionally be heated and dried by drying member 18 which is composed of a drying heater installed at the downstream position of the pre-treatment liquid applying member 14 in order to decrease the quantity of the water content in the pre-treatment liquid to a predetermined range. It is preferable to decrease the water content in an amount of 1.0 weight% to 30 weight% based on the total water content in the provided pre-treatment liquid provided on the receiving medium P.

### Image formation

Image formation is performed in such a manner that, employing an inkjet printer loaded with inkjet inks, ink droplets are ejected from the inkjet heads based on the digital signals onto a print medium.

Although both single pass inkjet printing and multi pass (i.e. scanning) inkjet printing may be used for image formation, single pass inkjet printing is preferably used since it is effective to perform high-speed printing. Single pass inkjet printing is an inkjet recording method with which ink droplets are deposited onto the receiving medium to form all pixels of the image by a single passage of a receiving medium underneath an inkjet marking module.

In Fig. 1, 11 represents an inkjet marking module comprising four inkjet marking devices, indicated with 111, 112, 113 and 114, each arranged to eject an ink of a different color (e.g. Cyan, Magenta, Yellow and blacK). The nozzle pitch of each head is e.g. about 360 dpi. In the present invention, "dpi" indicates a dot number per 2.54 cm.

An inkjet marking device for use in single pass inkjet printing, 111, 112, 113, 114, has a length, L, of at least the width of the desired printing range, indicated with double arrow 52, the printing range being perpendicular to the media transport direction, indicated with arrows 50 and 51. The inkjet marking device may comprise a single print head having a length of at least the width of said desired printing range. The inkjet marking device may also be constructed by combining two or more inkjet heads, such that the combined lengths of the individual inkjet heads cover the entire width of the printing range. Such a constructed inkjet marking device is also termed a page wide array (PWA) of print heads.

In image formation by ejecting an ink, an inkjet head (i.e. print head) employed may be either an on-demand type or a continuous type inkjet head. As an ink ejection system, there may be usable either the electric-mechanical conversion system (e.g., a single-cavity type, a double-cavity type, a bender type, a piston type, a shear mode type, or a shared wall type), or an electric-thermal conversion system (e.g., a thermal inkjet type, or a Bubble Jet type (registered trade name)). Among them, it is preferable to use a piezo type inkjet recording head which has nozzles of a diameter of 30 µm or less in the current image forming method.

Fig. 1 shows that after pre-treatment, the receiving medium P is conveyed to upstream part of the inkjet marking module 11. Then, image formation is carried out by each color ink ejecting from each inkjet marking device 111, 112, 113 and 114 arranged so that the whole width of the receiving medium P is covered.

Optionally, the image formation may be carried out while the receiving medium is temperature controlled. For this purpose a temperature control device 19 may be arranged to control the temperature of the surface of the transportation mechanism (e.g. belt or drum) underneath the inkjet marking module 11. The temperature control device 19 may be used to control the surface temperature of the receiving medium P, for example in the range of 30°C to 60°C. The temperature control device 19 may comprise heaters, such as radiation heaters, and a cooling means, for example a cold blast, in order to control the surface temperature of the receiving medium within said range. Subsequently and while printing, the receiving medium P is conveyed to the down stream part of the inkjet marking module 11.

### Drying and fixing

After an image has been formed on the receiving medium, the prints have to be dried and the image has to be fixed onto the receiving medium. Drying comprises the evaporation of solvents, in particular those solvents that have poor absorption characteristics with respect to the selected receiving medium.

Fig. 1 schematically shows a drying and fixing unit 20, which may comprise a heater, for example a radiation heater. After an image has been formed, the print is conveyed to and passed through the drying and fixing unit 20. The print is heated such that solvents present in the printed image, to a large extent water, evaporate. The speed of evaporation and hence drying may be enhanced by increasing the air refresh rate in the drying and fixing unit 20. Simultaneously, film formation of the ink occurs, because the prints are heated to a temperature above the minimum film formation temperature (MFT). The residence time of the print in the drying and fixing unit 20 and the temperature at which the drying and fixing unit 20 operates are optimized, such that when the print leaves the drying and fixing unit 20 a dry and robust print has been obtained. As described above, the transportation mechanism 12 in the fixing and drying unit 20 may be separated from the transportation mechanism of the pre-treatment and printing section of the printing apparatus and may comprise a belt or a drum.

Hitherto, the printing process was described such that the image formation step was performed in-line with the pre-treatment step (e.g. application of an (aqueous) pre-treatment liquid) and a drying and fixing step, all performed by the same apparatus (see Fig. 1). However, the printing process is not restricted to the above-mentioned embodiment. A method in which two or more machines are connected through a belt conveyor, drum conveyor or a roller, and the step of applying a pre-treatment liquid, the (optional) step of drying a coating solution, the step of ejecting an inkjet ink to form an image and the step or drying an fixing the printed image are performed. It is, however, preferable to carry out image formation with the above defined in-line image forming method.

### EXAMPLES

### Materials

All chemicals were obtained from Sigma Aldrich and used as received, unless stated otherwise.

The receiving media used in the examples are Black Label 80 gsm (plain paper obtained from Océ), machine coated media TC+ (Top Coated Plus Gloss obtained from Océ) and TCproS (Top Coated Pro Silk obtained from Océ).

### Experimental and Measurement methods

### Surface Tension

The surface tension is measured using a Sita bubble pressure tensiometer, model SITA online t60, according to the (maximum) bubble pressure method. The surface tension of the liquids to be tested (e.g. inks according to the present invention) is measured at 30°C unless otherwise indicated. The static surface tension is determined at a frequency of 0.1 Hz. The dynamic surface tension at 10 Hz.

### Viscosity

The viscosity is measured using a Haake Rheometer, type Haake Rheostress RS 600, with a flat plate geometry at a temperature of 32°C unless otherwise indicated. The viscosity is measured at shear rates (*γ̇*) in the range of between 10 s⁻¹ and 1000 s⁻¹, unless otherwise indicated.

### Fusing experiments

Fusing experiments are performed with a Ricoh Fuser, model 592 of Ricoh company LTD. The Ricoh fuser comprises a rotatable drum (fuse drum) having a diameter of 20 cm and a page-wide Halogen fuse lamp having a power of approximately 750 W. The fuse lamp is arranged at a position opposite to the fuse drum at a distance of 3 cm. The Ricoh fuser can be operated at settings from 1 to 10. Each setting corresponding to a rotation speed of the fuse drum: e.g. settings 4 and 6 correspond to fuse drum rotational speeds of 20 RPM and 35 RPM respectively.

The rotation speed of the fuse drum increases with an increasing Ricoh fuse setting. The exposure time to fuse radiation of a sheet of recording medium transported by the fuse drum decreases with an increasing Ricoh fuse setting, hence the applied fuse energy decreases with increasing Ricoh fuse setting. All fusing experiments performed with inks according to the present invention were performed under the same conditions.

### robustness

Directly after fusing an ink image to a sheet of recording media, the ink layer is rubbed with a teat for Pasteur pipettes made of PVC (Volac Red Teat, art. Number D813 obtained from Poulten & Graf Ltd). The robustness of the print is (visually) judged based on the damage imparted to the ink layer and valued from 0 to 10, wherein:
10 represents an excellent print robustness: no damage imparted to the ink layer;
7-9 represents a good print robustness: some matting effect of the rubbed area;
4-6 represents a sufficient print robustness: minor visual damage imparted to the ink layer;
1-3 represents a weak print robustness: substantial visual damage imparted to the ink layer;
0 represents a bad print robustness: completely removed ink layer after rubbing.

### Preparation of ink compositions

### Comparative Example A

85 grams of NeoCryl A-662 latex (obtained from DSM, 40 weight% latex, the latex particles having an average particle diameter D50 of ±100 nm; the latex resin having a T_{g} of 97 °C and a MFFT >90°C.), 82.5 grams of Neocryl XK237 latex (obtained from DSM, 40 weight% latex, the latex resin having an MFFT 8°C.), 271.4 grams of Pro-Jet Cyan APD 1000 pigment dispersion (14 weight% pigment dispersion, obtained from FujiFilm Imaging Colorants), 123 grams of glycerol (obtained from Sigma Aldrich), 154 grams of trimethylolpropane (obtained from Sigma Aldrich), 17 grams of a surfactant mix comprising Tegowet 240 (obtained from Evonik industries), Dynol 607 (obtained from Air Products) and BYK 348 (obtained from BYK), wherein the mass ratio of Tegowet 240 : Dynol 607 : BYK 348 was 1:2.5:1. and 267.1 grams of demineralized water were mixed in a vessel, stirred for approximately 60 minutes and filtered over a Pall Profile Star absolute glass filter having a pore size of 1µm. The obtained ink composition is shown in Table 2.

### Example 1

The procedure of comparative example A was repeated and 4 grams of poly vinyl pyrrolidone having a molecular weight of approximately 24.000 grams/mol (PVP K25 obtained from Sigma Aldrich) was added. The amounts of the constituents were slightly modified to obtain an ink composition having a viscosity similar to the ink composition according to comparative example A. The obtained ink composition is shown in Table 2.

### Example 2

The procedure of example 1 was repeated, wherein PVP K25 was replaced by 8 grams of PVP K15 (poly vinyl pyrrolidone obtained from Sigma Aldrich and having a molecular weight of approximately 10.000 grams/mol). The amounts of the constituents were slightly modified to obtain an ink composition having a viscosity similar to the ink composition according to comparative example A and example 1. The obtained ink composition is shown in Table 2.

### Comparative example B

The procedure of comparative example A was repeated, wherein TMP was replaced by 154 grams of pentaerythritol ethoxylate (3/4 EO/OH, i.e. 3 out of 4 -OH groups of pentaerythritol have been (poly)ether modified) obtained from Sigma Aldrich. The amounts of the constituents were slightly modified to obtain an ink composition having a viscosity similar to the ink composition according to the other examples. The obtained ink composition is shown in Table 2.

### Example 3

The procedure of comparative example B was repeated and 4 grams of poly vinyl pyrrolidone having a molecular weight of approximately 24.000 grams/mol (PVP K25 obtained from Sigma Aldrich) was added. The amounts of the constituents were slightly modified to obtain an ink composition having a viscosity similar to the ink composition according to comparative example B. The obtained ink composition is shown in Table 2.

### Robustness experiments

### Example 4

The inks according to comparative examples A and B and examples 1-3 were applied to the above described print substrates, by rod coating an ink layer having a thickness of 8 µm. The wet rod coat samples were subjected to the Ricoh fuser as described above and treated at a fuse setting 6 corresponding to fuse drum rotational speed of 35 RPM.

The robustness of the thus treated prints was determined in accordance with the above described method. The results are shown in Table 3.

**Table 2 : Ink compositions of comparative examples A and B and examples 1-3. The amounts are in weight% relative to the total ink composition.**

| (comparative) examples: | | | | | |
|---|---|---|---|---|---|
| compound | A | 1 | 2 | B | 3 |
| **Latex**¹⁾ | | | | | |
| A-662²⁾ | 3.4 | 2.8 | 2.9 | 3.2 | 2.8 |
| XK237²⁾ | 3.3 | 2.8 | 2.9 | 3.2 | 2.8 |
| **Pigment** ¹⁾³⁾ | 3.8 | 3.9 | 3.8 | 3.8 | 3.9 |
| **Cosolvents** | | | | | |
| glycerol | 12.3 | 12.8 | 12.7 | 12.4 | 12.6 |
| TMP⁴⁾ | 15.4 | 15.7 | 16 | - | - |
| Penta⁵⁾ | - | - | - | 15.4 | 15.9 |
| **Additive** | | | | | |
| PVP K25⁶⁾ | - | 0.4 | - | - | 0.4 |
| PVP K15⁶⁾ | - | - | 0.8 | - | - |
| **Surfactant mix**⁷⁾ | 1.7 | 1.7 | 1.7 | 1.6 | 1.7 |
| **Balance water** | to 100% | | | | |
| | | | | | |
| **properties** | | | | | |
| **Viscosity @ 32°C [mPa·s]** | 5 | 5.2 | 5.3 | 4.9 | 4.9 |
| **Surface tension @ 25°C, 0.1-10 Hz [mN/m]** | 24-32.5 | 24-32.5 | 24-32.5 | n.d. | n.d. |

| | | | | | |
|---|---|---|---|---|---|
| ¹⁾ The amount of latex and pigment is the amount of solids relative to the total ink composition ²⁾ DSM Neocryl series ³⁾ Pro-jet Cyan APD 1000 pigment (FujiFilm Imaging Colorants) ⁴⁾ Trimethylolpropane ⁵⁾ Pentaerythritol ethoxylate (3/4 EO/OH), having molar mass of 270 g/mol ⁶⁾ Polyvinylpyrrolidone (K25 : M_{w} ≈ 24000 g/mol; K15 : M_{w} ≈ 10000 g/mol) ⁷⁾ surfactant mix comprises Tegowet 240 : Dynol 607 : Byk 348 in a 1:2.5:1 ratio | | | | | |

**Table 3 : Results robustness tests**

| | Comp. Ex. A | Ex. 1 | Ex. 2 | Comp. Ex. B | Ex. 3 |
|---|---|---|---|---|---|
| Black Label | 6 | 7 | 7 | 5 | 7 |
| TC+ gloss | 2 | 8 | 7 | 2 | 7 |
| TCProS | 3 | 7 | 7 | 4 | 7 |

Table 3 shows that by adding PVP to ink compositions comprising a branched polyhydric alcohol (TMP in comparative example A) or a (poly)ether modified branched polyhydric alcohol (Penta in comparative example B), the robustness of ink layers prepared under similar conditions improves significantly (compare examples 1 and 2 with comparative example A and example 3 with comparative example B).

Table 3 further shows that by using PVP having a lower molecular weight in a larger concentration in the ink composition (compare example 2 with example 1), results in a similar robustness of ink layers prepared under similar conditions. It may therefore be concluded that the molecular mass of the used PVP and its concentration in the ink composition are exchangeable parameters for designing inks also comprising a branched polyhydric alcohol or a (poly)ether modified branched polyhydric alcohol and having improved robustness characteristics.

## Claims

1. Ink composition comprising a dispersion of resin particles in water, a colorant and a co-solvent fraction for stabilizing the dispersion, wherein the co-solvent fraction comprises a branched polyhydric alcohol and wherein the ink composition further comprises between 0.1 and 5 weight% poly vinyl pyrrolidone having a weight average molecular weight of at least 5000 g/mol..

2. The ink composition according to claim 1, wherein the co-solvent fraction further comprises a linear polyhydric alcohol.

3. The ink composition according to claim 3, wherein at least one linear polyhydric alcohol is selected from the group consisting of glycerol, 1,2,6-hexanetriol, diethylene glycol, triethylene glycol, tetra-ethylene glycol and dipropylene glycol.

4. The ink composition according to any one of the preceding claims, wherein the branched polyhydric alcohol or its (poly)ether modified derivative satisfies the following formula: 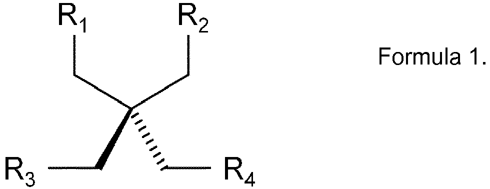 wherein:
R₁, R₂, R₃ and R₄ may be independently selected from -H; -OH; -CH₃ and -O-[CH₂-CH₂-O]ₚ-[CH₂-CH(CH₃)-O]_{q}-[CH(CH₃)-CH₂-O]ᵣ-H, wherein p, q and rare integers selected independently of one another in a range of between 0 and 25; with the proviso that at least two of the R₁-R₄ groups are selected from the group consisting of -OH, and -O-[CH₂-CH₂-O]ₚ-[CH₂-CH(CH₃)-O]_{q}-[CH(CH₃)-CH₂-O]ᵣ-H, wherein p, q and r have the above described meaning.

5. The ink composition according to any one of the preceding claims, wherein the branched polyhydric alcohol and/or the derivative thereof has a number average molecular weight (Mₙ) of less than 1000 g/mol

6. The ink composition according to any one of the preceding claims, wherein at least one branched polyhydric alcohol is selected from the group consisting of trimethylol propane, trimethylol ethane, pentaerithritol and neopentylglycol.

7. The ink compositions according to any one of claims 1-5, wherein at least one (poly)ether modified branched polyhydric alcohol is selected from the group consisting of: trimethylol propane ethoxylate, trimethylol ethane ethoxylate, pentaerithritol ethoxylate, neopentylglycol ethoxylate, trimethylol propane propoxylate, trimethylol ethane propoxylate, pentaerithritol propoxylate and neopentylglycol.

8. The ink composition according to any one of the preceding claims, wherein the poly vinyl pyrrolidone has a weight average molecular weight of between 10000 g/mol and 30000 g/mol.

9. The ink composition according to any one of the preceding claims, wherein the poly vinyl pyrrolidone is present in an amount of between 0.3 wt% and 1.5 wt% relative to the total ink composition.

10. The ink composition according to any one of the preceding claims, comprising :
- 0.5 - 20 wt% of water dispersed resin particles;
- 0.5 - 15 wt% of a colorant;
- 5 - 20 wt% linear polyhydric alcohol;
- 5 - 30 wt% branched polyhydric alcohol or a (poly)ether modified derivative of a branched polyhydric alcohol;
- 0.1 - 5 wt% poly vinyl pyrrolidone having a weight average molecular weight of between 5000 g/mol and 30000 g/mol, wherein all amount are relative to the total ink composition.

11. The ink composition according to claim 10, comprising
- 20 - 80 wt% water;
- 0.5 - 20 wt% of water dispersed resin particles;
- 0.5 - 15 wt% of a colorant;
- 5 - 20 wt% of a linear polyhydric alcohol selected from the group consisting of glycerol, 1,2,6-hexanetriol, diethylene glycol, triethylene glycol, tetra-ethylene glycol and dipropylene glycol;
- 5 - 30 wt% of a branched polyhydric alcohol selected from the group consisting of trimethylol propane, trimethylol ethane pentaerithritol, neopentylglycol and/or a (poly)ether modified derivative of a branched polyhydric alcohol selected from the group consisting of trimethylol propane ethoxylate, trimethylol ethane ethoxylate, pentaerithritol ethoxylate, neopentylglycol ethoxylate, trimethylol propane propoxylate, trimethylol ethane propoxylate, pentaerithritol propoxylate, neopentylglycol propoxylate; and
- 0.1 - 3 wt% poly vinyl pyrrolidone having a weight averaged molecular weight (M_{W}) of at least 7500 g/mol, wherein all amount are relative to the total ink composition.

## Patentansprüche

1. Tintenzusammensetzung enthaltend: eine Dispersion von Harzpartikeln in Wasser, ein Färbemittel, und eine Co-Lösungsmittelfraktion zur Stabilisierung der Dispersion, wobei die Co-Lösungsmittelfraktion einen verzweigten mehrwertigen Alkohol enthält und wobei die Tintenzusammensetzung weiterhin zwischen 0,1 und 5 Gew.% Polyvinylpyrrolidon mit einem gewichtsgemittelten Molekulargewicht von wenigstens 5000 g/mol enthält.

2. Tintenzusammensetzung nach Anspruch 1, bei der die Co-Lösungsmittelfraktion weiterhin einen linearen mehrwertigen Alkohol enthält.

3. Tintenzusammensetzung nach Anspruch 3, bei der wenigstens ein linearer mehrwertiger Alkohol ausgewählt ist aus der Gruppe bestehend aus Glycerol, 1,2,6-Hexantriol, Diethylenglycol, Triethylenglycol, Tetraethylenglycol und Dipropylenglycol.

4. Tintenzusammensetzung nach einem der vorstehenden Ansprüche, bei der verzweigte mehrwertige Alkohol oder seine (poly)ether-modifizierten Derivate der folgenden Formel genügen: 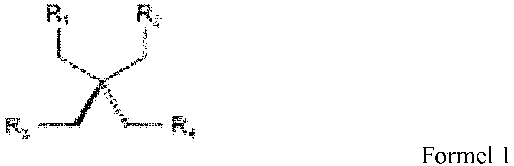 wobei:
R1, R2, R3 und R4 unabhängig voneinander gewählt werden können aus -H; -OH; -CH₃ und -O-[CH₂-CH₂-O]ₚ-[CH₂-CH(CH₃)-O]_{q}-[CH(CH₃)-CH₂-O]ᵣ-H, wobei p, q und r ganze Zahlen sind, die unabhängig voneinander ausgewählt sind aus einem Bereich zwischen 0 und 25; mit der Maßgabe, dass wenigstens zwei der Gruppen R1-R4 ausgewählt sind aus der Gruppe bestehend aus -OH und -CH₃ und -O-[CH₂-CH₂-O]ₚ-[CH₂-CH(CH₃)-O]_{q}-[CH(CH₃)-CH₂-O]ᵣ-H, wobei p, q und r die oben angegebene Bedeutung haben.

5. Tintenzusammensetzung nach einem der vorstehenden Ansprüche, bei der der verzweigte mehrwertige Alkohol und/oder dessen Derivate ein zahlengemitteltes Molekulargewicht (Mₙ) von weniger als 1000 g/mol haben.

6. Tintenzusammensetzung nach einem der vorstehenden Ansprüche, bei der wenigstens ein verzweigter mehrwertiger Alkohol ausgewählt ist aus der Gruppe bestehend aus: Trimethylolpropan, Trimethylolethan, Pentaerithritol und Neopentylglycol.

7. Tintenzusammensetzungen nach einem der Ansprüche 1-5, bei der wenigstens ein (poly)ether-modifizierter verzweigter mehrwertiger Alkohol ausgewählt ist aus der Gruppe bestehend aus: Trimethylolpropanethoxylat, Trimethylolethanethoxylat, Pentaerithritolethoxylat, Neopentylglycolethoxylat, Trimethylolpropanpropoxylat, Trimethylolethanpropoxylat, Pentaerithritolpropoxylat und Neopentylglycol.

8. Tintenzusammensetzung nach einem der vorstehenden Ansprüche, bei der das Polyvinylpyrrolidon ein gewichtsgemitteltes Molekulargewicht zwischen 10000 g/mol und 30000 g/mol hat.

9. Tintenzusammensetzung nach einem der vorstehenden Ansprüche, bei der das Polyvinylpyrrolidon in einer Menge von zwischen 0,3 Gew% und 1,5 Gew% bezogen auf die gesamte Tintenzusammensetzung vorhanden ist.

10. Tintenzusammensetzung nach einem der vorstehenden Ansprüche, mit:
- 0,5 - 20 Gew.% von in Wasser dispergierten Harzpartikeln;
- 0,5 - 15 Gew.% eines Färbemittels;
- 5 - 20 Gew.% linearer mehrwertiger Alkohol;
- 5 - 30 Gew.% verzweigter mehrwertiger Alkohol oder (poly)ether-modifiziertes Derivat eines verzweigten mehrwertigen Alkohols;
- 0,1 - 5 Gew.% Polyvinylpyrrolidon mit einem gewichtsgemittelten Molekulargewichts zwischen 5000 g/mol und 30000 g/mol, wobei alle Mengen auf die gesamte Tintenzusammensetzung bezogen sind.

11. Tintenzusammensetzung nach Anspruch 10, mit
- 20 - 80 Gew.% Wasser;
- 0,5 - 20 Gew.% in Wasser dispergierte Harzpartikel;
- 0,5 - 15 Gew.% eines Färbemittels;
- 5 - 20 Gew.% eines linearen mehrwertigen Alkohols, der ausgewählt ist aus der Gruppe bestehend aus Glycerol, 1,2,6-Hexantriol, Diethylenglycol, Triethylenglycol, Tetraethylenglycol und Dipropylenglycol;
- 5 - 30 Gew.% eines verzweigten mehrwertigen Alkohols, der ausgewählt ist aus der Gruppe bestehend aus Trimethylolpropan, Trimethylolethan. Pentaerithritol, Neopentylglycol und/oder ein (poly)ether-modifiziertes Derivat eines verzweigten mehrwertigen Alkohols ausgewählt aus der Gruppe bestehend aus Trimethylolpropanethoxylat, Trimethylolethanethoxylat, Pentaerithritolethoxylat, Neopentylglcolethoxylat, Trimethylolpropanpropoxylat, Trimethylolethanpropoxylat, Pentaerithritolpropoxylat, Neopentylglycolpropoxylat; und
- 0,1 - 3 Gew.% Polyvinylpyrrolidon mit einem gewichtsgemittelten Molekulargewicht (M_{W}) von wenigstens 7500 g/mol, wobei alle Mengen auf die gesamte Tintenzusammensetzung bezogen sind.

## Revendications

1. Composition d'encre comprenant une dispersion de particules de résine dans l'eau, un colorant et une fraction de co-solvant pour stabiliser la dispersion, dans laquelle la fraction de co-solvant comprend un alcool polyhydrique ramifié et dans laquelle la composition d'encre comprend en outre entre 0,1 et 5% en poids de polyvinylpyrrolidone ayant un poids moléculaire moyen en poids d'au moins 5 000 g/mol.

2. Composition d'encre selon la revendication 1, dans laquelle la fraction de co-solvant comprend en outre un alcool polyhydrique linéaire.

3. Composition d'encre selon la revendication 3, dans laquelle au moins un alcool polyhydrique linéaire est sélectionné dans le groupe constitué de glycérol, de 1,2,6-hexanetriol, de diéthylène glycol, de triéthylène glycol, de tétraéthylène glycol et de dipropylène glycol.

4. Composition d'encre selon l'une quelconque des revendications précédentes, dans laquelle l'alcool polyhydrique ramifié ou son dérivé modifié (poly)éther satisfait à la formule suivante : 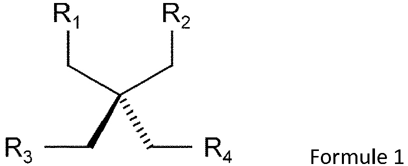 dans laquelle :
R₁, R₂, R₃ et R₄ peuvent être indépendamment sélectionnés parmi -H ; -OH ; -CH₃ et -O-[CH₂-CH₂-O]ₚ-[CH₂-CH(CH₃)-O]_{q}-[CH(CH₃)-CH₂-O]ᵣ-H, dans laquelle p, q et r sont des entiers sélectionnés indépendamment les uns des autres dans une plage entre 0 et 25 ;
sous réserve qu'au moins deux des groupes R₁ à R₄ soient sélectionnés dans le groupe constitué de -OH, et -O-[CH₂-CH₂-O]ₚ-[CH₂-CH(CH₃)-O]_{q}-[CH(CH₃)-CH₂-O]ᵣ-H, où p, q et r ont la signification décrite ci-dessus.

5. Composition d'encre selon l'une quelconque des revendications précédentes, dans laquelle l'alcool polyhydrique ramifié et/ou le dérivé de celui-ci a un poids moléculaire moyen en nombre (Mn) inférieur à 1 000 g/mol.

6. Composition d'encre selon l'une quelconque des revendications précédentes, dans laquelle au moins un alcool polyhydrique ramifié est sélectionné dans le groupe constitué de triméthylolpropane, de triméthyloléthane, de pentaérithritol et de néopentyle glycol.

7. Compositions d'encre selon l'une quelconque des revendications 1 à 5, dans lesquelles au moins un alcool polyhydrique ramifié modifié par un poly(éther) est sélectionné dans le groupe constitué de : triméthylolpropane éthoxylate, triméthyloléthane éthoxylate, pentaérithritol éthoxylate, néopentyle glycol éthoxylate, triméthylolpropane propoxylate, triméthyloléthane propoxylate, pentaérythritol propoxylate et néopentyle glycol.

8. Composition d'encre selon l'une quelconque des revendications précédentes, dans laquelle la polyvinylpyrrolidone a un poids moléculaire moyen en poids entre 10 000 g/mol et 30 000 g/mol.

9. Composition d'encre selon l'une quelconque des revendications précédentes, dans laquelle la polyvinylpyrrolidone est présente en une quantité entre 0,3% en poids et 1,5% en poids par rapport à la composition d'encre totale.

10. Composition d'encre selon l'une quelconque des revendications précédentes, comprenant :
- 0,5 à 20% en poids de particules de résine dispersées dans l'eau ;
- 0,5 à 15% en poids d'un colorant ;
- 5 à 20% en poids d'alcool polyhydrique linéaire ;
- 5 à 30% en poids d'alcool polyhydrique ramifié ou d'un dérivé (poly)éther modifié d'un alcool polyhydrique ramifié ;
- 0,1 à 5% en poids de polyvinylpyrrolidone ayant un poids moléculaire moyen en poids entre 5 000 g/mol et 30 000 g/mol, dans laquelle toutes les quantités sont par rapport à la composition d'encre totale.

11. Composition d'encre selon la revendication 10, comprenant
- 20 à 80% en poids d'eau ;
- 0,5 à 20% en poids de particules de résines dispersées dans l'eau ;
- 0,5 à 15% en poids d'un colorant ;
- 5 à 20% en poids d'un alcool polyhydrique linéaire sélectionné dans le groupe constitué de glycérol, de 1,2,6-hexanetriol, de diéthylène glycol, de triéthylène glycol, de tétraéthylène glycol et de dipropylène glycol ;
- 5 à 30% en poids d'un alcool polyhydrique ramifié sélectionné dans le groupe constitué de triméthylolpropane, de triméthyloléthane pentaérithritol, de néopentyle glycol et/ou d'un dérivé (poly)éther modifié d'un alcool polyhydrique ramifié sélectionné dans le groupe constitué de triméthylolpropane éthoxylate, de triméthyloléthane éthoxylate, de pentaérithritol éthoxylate, de néopentyle glycol éthoxylate, de triméthylolpropane propoxylate, de triméthyloléthane propoxylate, de pentaérithritol propoxylate, de néopentyle glycol propoxylate ; et
- 0,1 à 3% en poids de polyvinylpyrrolidone ayant un poids moléculaire moyen en poids (Mw) d'au moins 7 500 g/mol, dans laquelle toutes les quantités sont par rapport à la composition d'encre totale.
